# EUROPEAN PATENT APPLICATION

(11) **EP 4 764 071 A1**
(43) Date of publication of application: **24.06.2026**
(21) Application number: 24891023.4
(22) Date of filing: 23.07.2024
(51) Int. Cl.: E01C 3/00, C04B 5/00, C04B 5/06

(54) **ROADBED MATERIAL AND METHOD FOR MANUFACTURING ROADBED MATERIAL**

(30) Priority: 14.11.2023 JP 2023193517
(71) Applicant: JFE Steel Corporation, Tokyo, 100-0011 (JP)
(72) Inventor: HOSHINO, Takeru, Tokyo 100-0011 (JP)
(74) Representative: Grünecker Patent- und Rechtsanwälte PartG mbB
(86) International application number: PCT/JP2024/026376
(87) International publication number: WO 2025/104979

(57) **Abstract**

Provided are a roadbed material containing a particulate carbonated steelmaking slag and a powdery or granular raw material having a carbon fixation capacity and a method for producing the roadbed material without agglomeration of these raw materials.

The roadbed material contains at least one of a carbonated steelmaking slag, a wood material, a synthetic resin, and natural fibers in an amount of not less than 1 mass % and not more than 90 mass %.

## Description

### Technical Field

The present invention relates to a roadbed material and a method for producing the roadbed material.

### Background Art

Various decarbonization techniques are being studied for carbon neutrality. Among them, carbonate- or concrete-related techniques using CO₂ are easier to put into practical use than other techniques using CO₂, and have a high potential for CO₂ fixation. Patent Literature 1 discloses a roadbed material obtained by solidifying and agglomerating a slag using, as a binder, calcium carbonate or magnesium carbonate produced by a carbonation reaction.

### Citation List

### Patent Literature

PTL 1: Japanese Unexamined Patent Application Publication No. 11-21153

### Summary of Invention

### Technical Problem

The roadbed material disclosed in Patent Literature 1 is produced by a method which involves blowing carbon dioxide gas or a gas containing carbon dioxide gas into a pile or packed layer of powdery or granular slag to solidify and agglomerate the powdery or granular slag, and subjecting the agglomerates to particle size adjustment by crushing, sieving, etc. The roadbed material production method of Patent Literature 1, which involves agglomeration of powdery or granular slag and crushing of the agglomerates, has the problem of a very high production load.

The present invention has been made in view of the problem of the prior art. It is therefore an object of the present invention to provide a roadbed material containing a particulate carbonated steelmaking slag and a powdery or granular raw material having a carbon fixation capacity and a method for producing the roadbed material without agglomeration of these raw materials.

### Solution to Problem

Solutions to the above problem are as follows.
[1] A roadbed material containing at least one of an oxidized steelmaking slag, a wood material, a synthetic resin, and natural fibers in an amount of not less than 1 mass % and not more than 90 mass %.
[2] The roadbed material according to [1], wherein
   the carbonated steelmaking slag is a fine powder of carbonated steelmaking slag having a particle size of 1 mm or less, and
   the content of a carbonate in the fine powder of carbonated steelmaking slag is 1 mass % or more.
[3] The roadbed material according to [1] or [2], wherein the wood material is at least one of wood flour, wood chips, wood wool, wood fibers, pulp, a torrefied charcoal, a charcoal, cellulose nanofibers, carbon nanofibers, and carbon fibers.
[4] The roadbed material according to any one of [1] to [3], wherein the synthetic resin is at least one of synthetic rubber scrap, tire waste, polyvinyl chloride scrap, polyethylene scrap, and synthetic fiber scrap, which are synthetic polymer compounds.
[5] The roadbed material according to any one of [1] to [4], wherein the natural fibers are at least one of plant fibers and animal fibers.
[6] The roadbed material according to any one of [1] to [5], wherein the carbonated steelmaking slag is at least one of carbonated converter slag, carbonated secondary refining slag, carbonated hot metal pretreatment slag, and carbonated electric arc furnace slag.
[7] The roadbed material according to any one of [1] to [6], wherein the carbonated steelmaking slag is a slag obtained by carbonating a fine powder of steelmaking slag having a particle size of 1 mm or less.
[8] A method for producing a roadbed material, including a mixing step of mixing at least one of a carbonated steelmaking slag, a wood material, a synthetic resin, and natural fibers with a steelmaking slag, wherein in the mixing step, the mixing is performed such that the content of the at least one of the carbonated steelmaking slag, the wood material, the synthetic resin, and the natural fibers is not less than 1 mass % and not more than 90 mass %.
[9] The method for producing a roadbed material according to [8], wherein the carbonated steelmaking slag is a fine powder of carbonated steelmaking slag produced by carbonating a fine powder of steelmaking slag having a particle size of 1 mm or less.

### Advantageous Effects of Invention

According to the present invention, a raw material having a carbon fixation capacity can be mixed to produce a roadbed material without agglomerating the raw material. Thus, the roadbed material according to the present invention can be produced easily with a low production load. In addition, since a roadbed material in which CO₂ is fixed can be easily produced, the use of the roadbed material can contribute to the realization of carbon neutrality. Description of Embodiments

### [Embodiment 1]

The present invention will now be described through embodiments of the present invention. The roadbed materials of the present embodiments are each obtained through replacement of a part of a mixing material, to be mixed in the roadbed material, with a CO₂-containing material. CO₂ is thus fixed in the roadbed materials. Embodiment 1 describes a roadbed material containing a carbonated steelmaking slag.

The roadbed material according to Embodiment 1 contains a carbonated steelmaking slag. The roadbed material according to Embodiment 1, containing a carbonated steelmaking slag, can be produced by carrying out a mixing step of mixing the carbonated steelmaking slag with at least one of non-carbonated steelmaking slag, non-carbonated blast furnace slag, and non-carbonated electric arc furnace slag, and then crushing and blending the mixture so that it satisfies the particle size composition of CS-40, specified in JIS A 5015:2018 "Iron and steel slag for road construction".

As the carbonated steelmaking slag, a fine powder of carbonated steelmaking slag having a particle size of 1 mm or less, produced by carbonating a fine powder of steelmaking slag having a particle size of 1 mm or less, is preferably used. Thus, the carbonated steelmaking slag is preferably a slag obtained by carbonating a fine powder of steelmaking slag having a particle size of 1 mm or less. A particle size of 1 mm or less refers to the particle size of particles that pass through a sieve having a mesh opening size of 1 mm. The use of a fine powder of steelmaking steelmaking slag having a particle size of 1 mm or less can increase the area of reaction interface during carbonation and thereby provide a reaction-promoting effect, resulting in an increased amount of CO₂ fixed in the carbonated steelmaking slag.

The carbonated steelmaking slag can be produced by adding steam to a steelmaking slag, and introducing a CO₂-containing gas into the slag to carry out carbonation for 10 minutes or more. Instead of adding steam to the steelmaking slag, the steelmaking slag may be held in water, and a CO₂-containing gas may be introduced into the water to carry out carbonation for one day to produce carbonated steelmaking slag. Instead of adding steam to the steelmaking slag, water may be sprayed onto the steelmaking slag, and a CO₂-containing gas may be introduced to carry out carbonation for one day to produce carbonated steelmaking slag. It is sufficient that the CO₂-containing gas to be introduced have a CO₂ concentration of 1 vol. % or more. The CO₂-containing gas used may be an exhaust gas having a CO₂ concentration of 10 vol. % or more, discharged from a production process facility in a steelworks. The steelmaking slag used to produce the carbonated steelmaking slag is at least one of converter slag, secondary refining slag, hot metal pretreatment slag, and electric arc furnace slag.

The carbonated steelmaking slag contains a carbonate which has been introduced by the carbonation described above. The carbonate is, for example, one of calcium carbonate, calcium carbonate hydrate, magnesium carbonate, and magnesium carbonate hydrate. The carbonation of steelmaking slag is preferably performed such that the content of the carbonate in the carbonated steelmaking slag is 1 mass % or more. A higher content of the carbonate, which contains CO₂, in the carbonated steelmaking slag means that an increased amount of CO₂ is fixed in the roadbed material. Therefore, it is preferred to use a carbonated steelmaking slag having a carbonate content of 1 mass % or more as a raw material for the roadbed material. This increases the amount of CO₂ fixed in the roadbed material. The higher the carbonate content in the carbonated steelmaking slag, the more the amount of CO₂ fixed in the roadbed material; therefore, there is no need to place an upper limit on the carbonate content.

The carbonated steelmaking slag is mixed in the roadbed material such that the content of the carbonated steelmaking slag is 1 mass % or more. This enables fixation of CO₂ in the roadbed material, contributing to the realization of carbon neutrality. The carbonated steelmaking slag is mixed in the roadbed material such that the content of the carbonated steelmaking slag is 90 mass % or less. By making the content of the carbonated steelmaking slag 90 mass % or less, the bearing capacity of the roadbed material can be increased, making it possible to make the modified CBR of the roadbed material 60 or more. As used herein, the modified CBR test refers to the CBR of a roadbed material as determined when it is compacted to 95% of its maximum dry density.

As described above, since CO₂ is fixed in the roadbed material according to Embodiment 1 containing a carbonated steelmaking slag, the use of the roadbed material can contribute to the realization of carbon neutrality. Furthermore, the roadbed material can ensure a modified CBR of 60 or more, and thus can have a high bearing capacity. In addition, since the carbonated steelmaking slag contains calcium carbonate or the like, the roadbed material can also achieve the effect of inhibiting dissolution of an alkali.

### [Embodiment 2]

Next, Embodiment 2 describes a roadbed material containing a wood material. The use of a wood material as a raw material for a roadbed material enables fixation of CO₂ in the roadbed material. The wood material is, for example, at least one of wood flour, wood chips, wood wool, wood fibers, pulp, a torrefied charcoal, a charcoal, cellulose nanofibers, carbon nanofibers, and carbon fibers.

The roadbed material according to Embodiment 2, containing a wood material, can be produced by carrying out a mixing step of mixing the wood material with non-carbonated steelmaking slag, and then crushing and blending the mixture so that it satisfies the particle size composition of CS-40, specified in JIS A 5015:2018 "Iron and steel slag for road construction". The wood material is mixed in the roadbed material such that the content of the wood material is not less than 1 mass % and not more than 90 mass %. This enables fixation of CO₂ in the roadbed material and can make the modified CBR of the roadbed material 60 or more.

The use of a wood material as a raw material for a roadbed material makes it possible to adjust the specific gravity of the roadbed material to be produced. A roadbed material having a low wood material content and a high specific gravity is suitable for use, for example, as a roadbed material for parking lots. On the other hand, a roadbed material having a high wood material content and a low specific gravity is suitable for use, for example, as a pavement material for a solar power generation facility. The use of a roadbed material having a high wood material content and a low specific gravity facilitates construction work, enabling a reduction in the period of construction.

The high water absorbency of a wood material can reduce separation of a fine powdery raw material in the roadbed material during construction. Therefore, the roadbed material containing a wood material achieves a high filling rate during construction and has a high bearing capacity. Furthermore, the roadbed material containing a wood material has excellent elasticity because expansion of the roadbed material can be absorbed by the wood material. Since the modified CBR of a roadbed material increases with an increase in the modulus of elasticity of the roadbed material, the roadbed material containing a wood material has a higher modified CBR than a roadbed material containing no wood material.

A roadbed material containing no wood material, in a piled state, has a natural moisture content of 2 to 3 mass %, while the roadbed material containing a wood material in a piled state, which has high water absorbency, has a natural moisture content of 6 to 7 mass %. Because of the difference in natural moisture content, the roadbed material containing a wood material in a piled state generates less dust or the like than a roadbed material containing no wood material in a piled state.

The wood material preferably contains at least one of a torrefied charcoal and a charcoal. A torrefied charcoal or a charcoal has many pores and therefore increases the water absorbency of the wood material. Thus, the roadbed material containing a wood material which contains at least one of a torrefied charcoal and a charcoal achieves a higher filling rate during construction and has a higher bearing capacity. The torrefied charcoal can be produced by heating the wood material in an oxygen-free or low-oxygen reducing atmosphere at a temperature of not less than 200°C and less than 300°C. The charcoal can be produced by heating the wood material in an oxygen-free or low-oxygen reducing atmosphere at a temperature of not less than 300°C and not more than 1000°C.

### [Embodiment 3]

Next, Embodiment 3 describes a roadbed material containing a synthetic resin. The use of a synthetic resin as a raw material for a roadbed material enables fixation of CO₂ in the roadbed material. The synthetic resin is, for example, at least one of synthetic rubber scrap, tire waste, polyvinyl chloride scrap, polyethylene scrap, and synthetic fiber scrap, which are synthetic polymer compounds. Examples of the synthetic fiber scrap include polyester-based, polyurethane-based, polyvinyl alcohol-based, polyacrylonitrile-based, and polypropylene-based synthetic fiber scraps, and do not include nylon resin fiber scrap, which is polyamide-based.

The roadbed material according to Embodiment 3, containing a synthetic resin, can be produced by carrying out a mixing step of mixing the synthetic resin with non-carbonated steelmaking slag, and then crushing and blending the mixture so that it satisfies the particle size composition of CS-40, specified in JIS A 5015:2018 "Iron and steel slag for road construction". The synthetic resin is mixed in the roadbed material such that the content of the synthetic resin is not less than 1 mass % and not more than 90 mass %. This enables fixation of CO₂ in the roadbed material and can make the modified CBR of the roadbed material 60 or more.

The use of a synthetic resin as a raw material for a roadbed material can produce a roadbed material having high thermal insulation properties. Furthermore, the use of a synthetic resin as a raw material for a roadbed material can produce a lightweight roadbed material or a roadbed material having a high modulus of elasticity. Since the modified CBR of a roadbed material increases with an increase in the modulus of elasticity of the roadbed material, the roadbed material containing a synthetic resin has a higher modified CBR than a roadbed material containing no synthetic resin.

### [Embodiment 4]

Next, Embodiment 4 describes a roadbed material containing natural fibers. The use of natural fibers as a raw material for a roadbed material enables fixation of CO₂ in the roadbed material. The natural fibers are, for example, at least one of plant fibers such as cotton, hemp, linen, rice husk, palm kernel shells, and banana peels; and animal fibers such as wool, cashmere, and silk.

The roadbed material according to Embodiment 4, containing natural fibers, can be produced by carrying out a mixing step of mixing the natural fibers with non-carbonated steelmaking slag, and then crushing and blending the mixture so that it satisfies the particle size composition of CS-40, specified in JIS A 5015:2018 "Iron and steel slag for road construction". The natural fibers are mixed in the roadbed material such that the content of the natural fibers is not less than 1 mass % and not more than 90 mass %. This enables fixation of CO₂ in the roadbed material and can make the modified CBR of the roadbed material 60 or more.

The use of natural fibers as a raw material for a roadbed material can produce a roadbed material having a high strength. Furthermore, the use of natural fibers as a raw material for a roadbed material can produce a lightweight roadbed material or a roadbed material having a high modulus of elasticity. Since the modified CBR of a roadbed material increases with an increase in the modulus of elasticity of the roadbed material, the roadbed material containing natural fibers has a higher modified CBR than a roadbed material containing no natural fibers.

While the examples of roadbed materials, each containing a carbonated steelmaking slag, a wood material, a synthetic resin, or natural fibers, have been described in Embodiments 1 to 4, the present invention is not limited to such roadbed materials. A roadbed material may be produced using a wood material together with a carbonated steelmaking slag, using a synthetic resin together with a carbonated steelmaking slag, or using natural fibers together with a carbonated steelmaking slag. Furthermore, a roadbed material may be produced using a synthetic resin together with a wood material, using natural fibers together with a wood material, or using natural fibers together with a synthetic resin.

The roadbed materials according to the present embodiments each contain at least one of a carbonated steelmaking slag, a wood material, a synthetic resin, and natural fibers, with the content of the at least one of the carbonated steelmaking slag, the wood material, the synthetic resin, and the natural fibers being not less than 1 mass % and not more than 90 mass %. As described above, the roadbed materials according to the present embodiments can be produced by mixing a carbonated steelmaking slag, a wood material, a synthetic resin, and natural fibers, without agglomerating the raw materials, and adjusting the mixture to a predetermined particle size. Thus, the roadbed materials can be produced more easily and with less production load than ever before.

### EXAMPLES

A description will now be given of examples in which roadbed materials, which satisfy the particle size composition of CS-40, were produced by using, as mixing materials in which CO₂ was fixed, a carbonated steelmaking slag, a wood material, a synthetic resin, and natural fibers at adjusted mixing ratios. The type of mixing material, the mixing ratio, the maximum particle size, the natural moisture content of each roadbed material, the modified CBR of each roadbed material, the results of strength determination, and the amount of CO₂ fixed in each roadbed material are shown in Table 1 below. The chemical compositions of the steelmaking slags used in the examples are shown in Table 2 below.

**[Table 1]**

| | Mixing material (CO₂-fixed material) | Type | Steelmaking slag (non-carbonated material) | Mixing ratio (mass %) | Maximum particle size of mixing material (mm) | Natural moisture content (mass %) | Modified CBR | Strength determination | Amount of fixed CO₂ (kg-CO₂/t) |
|---|---|---|---|---|---|---|---|---|---|
| Inventive Ex.1 | Converter slag | Carbonated steelmaking slag | Converter slag | 1 | 4.75 | 2.4 | 91 | ○ | 5 |
| Inventive Ex. 2 | Secondary refining slag | | Secondary refining slag | 5 | 4.75 | 2.9 | 103 | ○ | 25 |
| Inventive Ex. 3 | Hot metal pretreatment slag | | Hot metal pretreatment slag | 10 | 4.75 | 2.8 | 116 | ○ | 50 |
| Inventive Ex. 4 | Converter slag | | Converter slag | 50 | 19.0 | 2.6 | 87 | ○ | 250 |
| Inventive Ex. 5 | Secondary refining slag | | Secondary refining slag | 90 | 37.5 | 2.1 | 63 | ○ | 450 |
| Inventive Ex. 6 | Torrefied charcoal | Wood material | Converter slag | 1 | 4.75 | 5.7 | 95 | ○ | 25 |
| Inventive Ex. 7 | Cellulose nanofibers | | Secondary refining slag | 5 | 4.75 | 7.4 | 108 | ○ | 125 |
| Inventive Ex. 8 | Wood flour | | Hot metal pretreatment slag | 10 | 4.75 | 9.5 | 121 | ○ | 250 |
| Inventive Ex. 9 | Torrefied charcoal | | Converter slag | 50 | 19.0 | 40.2 | 94 | ○ | 1250 |
| Inventive Ex. 10 | Charcoal | | Secondary refining slag | 90 | 37.5 | 80.2 | 61 | ○ | 2250 |
| Inventive Ex. 11 | Synthetic rubber scrap | Synthetic resin | Converter slag | 1 | 4.75 | 2.3 | 88 | ○ | 60 |
| Inventive Ex. 12 | Synthetic fiber scrap | | Secondary refining slag | 5 | 4.75 | 2.8 | 95 | ○ | 300 |
| Inventive Ex. 13 | Tire waste | | Hot metal pretreatment slag | 10 | 4.75 | 2.6 | 103 | ○ | 600 |
| Inventive Ex. 14 | Synthetic rubber scrap | | Converter slag | 50 | 19.0 | 2.6 | 81 | ○ | 3000 |
| Inventive Ex. 15 | Synthetic fiber scrap | | Secondary refining slag | 90 | 37.5 | 2.7 | 62 | ○ | 5400 |
| Inventive Ex. 16 | Palm kernel shells | Natural fibers | Converter slag | 1 | 4.75 | 2.4 | 85 | ○ | 16 |
| Inventive Ex. 17 | Rice husk | | Secondary refining slag | 5 | 4.75 | 2.1 | 92 | ○ | 80 |
| Inventive Ex. 18 | Wool | | Hot metal pretreatment slag | 10 | 4.75 | 2.5 | 98 | ○ | 160 |
| Inventive Ex. 19 | Palm kernel shells | | Converter slag | 50 | 19.0 | 2.8 | 75 | ○ | 800 |
| Inventive Ex. 20 | Rice husk | | Secondary refining slag | 90 | 37.5 | 2.9 | 60 | ○ | 1440 |
| Inventive Ex. 21 | Converter slag, charcoal, synthetic fiber scrap, rice husk | Mixture of four types of materials | Converter slag | 20 | 4.75 | 8.9 | 113 | ○ | 530 |
| Inventive Ex. 22 | Converter slag, charcoal, synthetic fiber scrap, rice husk | | Secondary refining slag | 50 | 19.0 | 40.2 | 84 | ○ | 1325 |
| Inventive Ex. 23 | Converter slag, charcoal, synthetic fiber scrap, rice husk | | Hot metal pretreatment slag | 90 | 37.5 | 81.4 | 62 | ○ | 2385 |
| Comp. Ex. 1 | Secondary refining slag | Carbonated steelmaking slag | Secondary refining slag | 95 | 37.5 | 2.6 | 55 | × | 475 |
| Comp. Ex. 2 | Charcoal | Wood material | Hot metal pretreatment slag | 95 | 37.5 | 100.6 | 30 | × | 2375 |
| Comp. Ex. 3 | Pulp | Synthetic resin | Converter slag | 95 | 37.5 | 2.8 | 42 | × | 5700 |
| Comp. Ex. 4 | Silk | Natural fibers | Hot metal pretreatment slag | 95 | 37.5 | 2.6 | 23 | × | 1520 |
| Comp. Ex. 5 | - | | Converter slag | 0 | - | 2.1 | 80 | ○ | 0 |

**[Table 2]**

| Type | CaO | SiO₂ | Al₂O₃ | MgO | MnO | T-Fe | P₂O₅ |
|---|---|---|---|---|---|---|---|
| Converter slag | 47.9 | 12.1 | 4.2 | 5.7 | 2.7 | 18.6 | 2.5 |
| Secondary refining slag | 42.5 | 13.4 | 21.8 | 5.1 | 6.3 | 5.2 | 1.8 |
| Hot metal pretreatment slag | 26.0 | 24.2 | 3.1 | 1.3 | 3.6 | 29.2 | 2.7 |

| | | | | | | | |
|---|---|---|---|---|---|---|---|
| unit: mass % | | | | | | | |

In Table 1 above, "mixing ratio" refers to the content (mass %) of a mixing material in the roadbed material. "Maximum particle size of mixing material" means that the entire amount of a mixing material passed through a sieve having a nominal opening size corresponding to the maximum particle size (mm) and specified in JIS Z 8801-1:2019.

"Modified CBR" refers to CBR at 95% maximum dry density. The CBR refers to a load as determined when a 5.0 cm-diameter piston is penetrated 2.5 mm or 5.0 mm into the surface of a roadbed material, and expressed as a percentage of a standard load. The standard load is 13.4 kN for 2.5 mm penetration and 19.9 kN for 5.0 mm penetration. For "strength determination", when the modified CBR of a roadbed material was 60 or more, the roadbed material was determined to have a sufficient bearing capacity and rated "∘". When the modified CBR of a roadbed material was less than 60, the roadbed material was determined to be incapable of ensuring a sufficient bearing capacity and rated "×".

The torrefied charcoal, which is a wood material, had been produced by treating wood flour having a particle size of 1 mm or less at 250°C for 10 minutes using superheated steam. The charcoal, which is a wood material, had been produced by treating wood flour having an average particle size of 300 µm or less at 300°C for 20 minutes using superheated steam.

As can be seen from the results of Inventive Examples 1 to 23 shown in Table 1, the roadbed materials, containing at least one of a carbonated steelmaking slag, a wood material, a synthetic resin, and natural fibers in an amount of not less than 1 mass % and not more than 90 mass %, had a good balance of coarse particles and fine particles within the range that satisfies the particle size composition of CS-40, and had a high packing density and a high modified CBR. The results indicate that the roadbed materials of Inventive Examples 1 to 23 can fix CO₂ and have a high bearing capacity with a modified CBR of 60 or more. The use of such a roadbed material can contribute to the realization of carbon neutrality.

On the other hand, the roadbed material (Comparative Example 5) which does not contain a carbonated steelmaking slag, a wood material, a synthetic resin, or natural fibers had a modified CBR of 60 or more, but was unable to fix CO₂ in the roadbed material. The roadbed materials, containing a carbonated steelmaking slag, a wood material, a synthetic resin, or natural fibers in an amount of 95 mass %, i.e. more than 90 mass %, had a high mixing ratio of the mixing material and contained a high proportion of fine particles within the range that satisfies the particle size of CS-40, and therefore had a low filling rate and a low modified CBR of less than 60%. The results demonstrate that the roadbed materials according to Comparative Examples 1 to 4, containing a carbonated steelmaking slag, a wood material, a synthetic resin, or natural fibers in an amount of more than 90 mass %, can each fix CO₂ therein, but have a low bearing capacity with a modified CBR of less than 60.

The results also demonstrate that the roadbed materials in which a wood material was mixed had a higher natural moisture content than the other roadbed materials and had a high modified CBR. A roadbed material having a higher natural moisture content will adsorb a larger amount of powder; therefore, a roadbed material containing a wood material, when stored in a piled state, can generate less dust or the like than other roadbed materials.

## Claims

1. A roadbed material comprising at least one of a carbonated steelmaking slag, a wood material, a synthetic resin, and natural fibers in an amount of not less than 1 mass % and not more than 90 mass %.

2. The roadbed material according to claim 1, wherein
the carbonated steelmaking slag is a fine powder of carbonated steelmaking slag having a particle size of 1 mm or less, and
the content of a carbonate in the fine powder of carbonated steelmaking slag is 1 mass % or more.

3. The roadbed material according to claim 1 or 2, wherein the wood material is at least one of wood flour, wood chips, wood wool, wood fibers, pulp, a torrefied charcoal, a charcoal, cellulose nanofibers, carbon nanofibers, and carbon fibers.

4. The roadbed material according to any one of claims 1 to 3, wherein the synthetic resin is at least one of synthetic rubber scrap, tire waste, polyvinyl chloride scrap, polyethylene scrap, and synthetic fiber scrap, which are synthetic polymer compounds.

5. The roadbed material according to any one of claims 1 to 4, wherein the natural fibers are at least one of plant fibers and animal fibers.

6. The roadbed material according to any one of claims 1 to 5, wherein the carbonated steelmaking slag is at least one of carbonated converter slag, carbonated secondary refining slag, carbonated hot metal pretreatment slag, and carbonated electric arc furnace slag.

7. The roadbed material according to any one of claims 1 to 6, wherein the carbonated steelmaking slag is a slag obtained by carbonating a fine powder of steelmaking slag having a particle size of 1 mm or less.

8. A method for producing a roadbed material, comprising:
a mixing step of mixing at least one of a carbonated steelmaking slag, a wood material, a synthetic resin, and natural fibers with a steelmaking slag,
wherein in the mixing step, the mixing is performed such that the content of the at least one of the carbonated steelmaking slag, the wood material, the synthetic resin, and the natural fibers is not less than 1 mass % and not more than 90 mass %.

9. The method for producing a roadbed material according to claim 8, wherein the carbonated steelmaking slag is a fine powder of carbonated steelmaking slag produced by carbonating a fine powder of steelmaking slag having a particle size of 1 mm or less.
